# EUROPEAN PATENT SPECIFICATION

(11) **EP 0 971 864 B1**
(45) Date of publication and mention of the grant of the patent: **16.10.2002**
(21) Application number: 98917979.1
(22) Date of filing: 03.04.1998
(51) Int. Cl.: C04B 35/536, F16J 15/34

(54) **FLEXIBLE GRAPHITE COMPOSITE**
VERBUNDWERKSTOFF AUS FLEXIBLEM GRAPHIT
COMPOSITE DE GRAPHITE FLEXIBLE

(30) Priority: 04.04.1997 US 833136
(43) Date of publication of application: 19.01.2000
(73) Proprietor: UCAR CARBON TECHNOLOGY CORPORATION, Wilmington, Delaware 19803 (US)
(72) Inventor: MERCURI, Robert, Angelo, Seven Hills, OH 44131 (US); CAPP, Joseph, Paul, Stongsville, OH 44136 (US); GOUGH, Jeffrey, John, Olmsted Township, OH 44138 (US)
(74) Representative: W.P. Thompson & Co.
(86) International application number: US9806476
(87) International publication number: WO98045224

(56) References cited:
- DE-A- 4 007 060

## Description

### FIELD OF THE INVENTION

The present invention relates to a composite of flexible graphite and needle-shaped ceramic particles which can be used in the making of gaskets.

### BACKGROUND OF THE INVENTION

The term "flexible graphite" as used herein represents the exfoliated reaction product of rapidly heated natural graphite particles which have been treated with an agent that intercalates into the crystal-structure of the graphite to expand the intercalated particles at least 80 or more times in the direction perpendicular to the carbon layers in the crystal structure. Flexible graphite and the making thereof is described in U.S. Pat. No. 3,404,061 Shane et al. Expanded, i.e. exfoliated graphite may be compressed into thin sheets (hereinafter referred as flexible graphite "foil") with a density approaching theoretical density, although a density of about 801 to 1362 kg/m³ (50 to 85 lbs./ft³). is suitable for most applications, including compression into shapes suitable as seal rings in engine exhaust and other applications.

A common method for making expandable graphite particles is described by Shane et al in U.S. Patent No. 3,404,061. In the typical practice of this method, natural graphite flakes are intercalated by dispersing the flakes in a solution containing an oxidizing agent e.g., a mixture of nitric and sulfuric acid. The intercalation solution contains oxidizing and other intercalating agents known in the art. Examples include those containing oxidizing agents and oxidizing mixtures, such as solutions containing nitric acid, potassium chlorate, chromic acid, potassium permanganate, potassium chromate, potassium dichromate, perchloric acid, and the like, or mixtures, such as for example, concentrated nitric acid and chlorate, chromic acid and phosphoric acid, sulfuric acid and nitric acid, or mixtures of a strong organic acid, e.g. trifluoroacetic acid, and a strong oxidizing agent soluble in the organic acid. A preferred intercalating agent is a solution of a mixture of sulfuric acid, or sulfuric acid and phosphoric acid, and an oxidizing agent, i.e. nitric acid, perchloric acid, chromic acid, potassium permanganate, hydrogen peroxide, iodic or periodic acids, or the like. Although less preferred, the intercalation solutions may contain metal halides such as ferric chloride, and ferric chloride mixed with sulfuric acid, or a halide, such as bromine as a solution of bromine and sulfuric acid or bromine in an organic solvent. After the flakes are intercalated excess solution is drained from the flakes and after washing with water, the intercalated graphite flakes are dried and are expandable upon exposure to a flame for only a few seconds. The thus treated particles of graphite are hereafter referred to as "particles of intercalated graphite". Upon exposure to high temperature, the particles of intercalated graphite expand in dimension as much as 80 to 1000 or more times its original volume in an accordion-like fashion in the c-direction, i.e. in the direction perpendicular to the crystalline planes of the constituent graphite particles. The exfoliated graphite particles are vermiform in appearance, and are therefore commonly referred to as worms. The worms may be compressed together into flexible sheets which, unlike the original graphite flakes, can be formed and cut into various shapes.

Flexible graphite foil is coherent, with good handling strength, and flexible graphite foil can be wound into rolls and can also be wrapped around metal fixtures such as mandrels, possesses desirable heat transfer properties and is, accordingly, particularly useful for high temperature applications such as engine exhaust seal ring applications. It has been proposed to increase the sealability of flexible graphite sheet or foil by impregnating the same with resin. However, the surface layers of flexible graphite sheet or foil, due to the alignment of exfoliated graphite particles and the constituent layers of atoms parallel to the surface of the flexible sheet or foil, resist resin impregnation when the sheet or foil is immersed in liquid resin. However, due to the well known anisotropy of flexible graphite, resin will flow readily within the flexible graphite sheet in directions parallel to the opposed parallel planar surfaces of the sheet or foil and the planes of the constituent graphite particles of the sheet, i.e. transverse to the "c axis" direction of the graphite particles if penetration into the flexible graphite sheet can first be achieved.

Accordingly, it is an object of the present invention to provide a flexible graphite sheet, or foil, of increased permeability to enable increased resin impregnation.

### BRIEF DESCRIPTION OF THE DRAWING

Figure 1 shows, in an enlarged cross-section sketch of a sheet of flexible graphite (original thickness of 0.254 mm (0.01 inch)) containing ceramic fibers in accordance with the present invention;
Figures 2 through 6 are electron microscope views (original magnification 100X) at increasing electron beam intensity voltages (2.5 KV to 40 KV) of a portion of a planar surface of a flexible graphite sheet containing ceramic fibers in accordance with the present invention.

### SUMMARY OF THE INVENTION

The present invention relates to a composite of a sheet of flexible graphite having opposed parallel, planar outer surfaces and needle-shaped ceramic fiber particles which are embedded in the flexible sheet and which extend from interior the flexible sheet to at least one of the planar outer surfaces of the flexible graphite sheet.

### DETAILED DESCRIPTION

In the practice of a particular embodiment of the present invention, intercalated natural graphite flakes are mixed and blended with from 1.5 to 30% by weight of needle-shaped ceramic fiber particles having a length of 0.15 to 1.5 millimeters. The width of the particles should be from 0.04 to 0.004 mm. The ceramic fiber particles are non-reactive and non-adhering to graphite and are stable at temperatures up to 1371.1°C (2500°F). Suitable ceramic fiber particles are formed of macerated quartz glass fibers, carbon and graphite fibers, zirconia, boron nitride, silicon carbide and magnesia fibers, naturally occurring mineral fibers such as calcium metasilicate fibers, calcium aluminum silicate fibers, aluminum oxide fibers and the like.

The mixture of intercalated natural graphite flake and needle-shaped ceramic fiber particles, in which the graphite flake and ceramic fiber particles are in general alignment, is exposed to a flame at a temperature up to 1371.1°C (2500°F) to exfoliate, i.e. expand the intercalated graphite flake into expanded graphite particles from 80 to 1000 times the volume of the unexpanded intercalated natural graphite flake which surround and entrap the needle-shaped ceramic fiber particles. Due to the expansion, the ceramic fiber particles are no longer in substantial alignment with the graphite particles but are randomly positioned in the mixture of exfoliated graphite and ceramic fiber. The mixture of exfoliated graphite particles and randomly oriented needle-shaped ceramic fiber particles is roll-pressed into sheet or foil typically 0.1 to 3.5 mm thick. The resultant sheet, or foil, is characterized by having needle-shaped particles extending from interior of the flexible graphite sheet to and through at least one of the opposed planar surfaces of the flexible graphite sheet. Since the needle-shaped ceramic fiber particles are non-reactive and non-adhering to the graphite in the flexible sheet, a plurality of annular channels surrounding the respective needle-shaped particles is provided in the flexible graphite sheet extending from the opposed surfaces of the sheet into the body of the sheet. These channels, with the flexible graphite sheet immersed in liquid resin, receive the resin which then infiltrates the flexible graphite sheet in the more permeable direction parallel to the planar surfaces of the flexible graphite sheet and the pressed, exfoliated graphite particles forming the sheet, assisted by channels formed by needle shaped ceramic fiber particles embedded between, but not penetrating the planar parallel surfaces of the flexible graphite sheet. The ceramic fiber particles remain stable during all steps of the processing treatment so that the channels are not blocked by melted fiber or fiber decomposition products. After curing of the resin, within the graphite sheet the sealability of the flexible graphite sheet is enhanced for gaskets formed from said sheet. In a preferred embodiment the resin-containing sheet is calendered by roll pressing between pressure rolls.

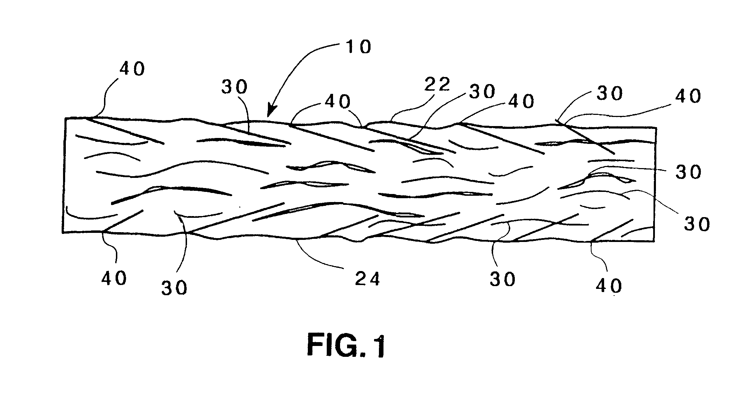

Figure 1 is a drawing sketch based on microscope observations of 0.254 mm (0.01 inch) thick sheets of flexible graphite which shows a flexible graphite sheet 10, in cross-section, with parallel opposed planar surfaces 22, 24. Embedded ceramic fiber particles are shown at 30. Penetration of sheet 10 by ceramic fibers 30 is illustrated at 40.

### EXAMPLE I

Natural graphite flake, sized 80% by weight held on 0.3 mm (50 mesh) was treated in a mixture of 90 wt. % sulfuric acid and 10 wt. % nitric acid. The thus treated intercalated graphite flake was water washed and dried to about 1% by weight water. One (1) pound of this intercalated flake was mixed with 0.068 kg (0.15 pounds) of needle-shaped ceramic fiber of commercially available calcium metasilicate sized mostly with a 15 to 25% aspect ratio. The mixture of intercalated graphite and calcium metasilicate fiber was introduced into a furnace of 1371.1°C (2500°F) to obtain rapid expansion of the intercalated graphite flake into vermicular worm-shaped particles having a volume of about 325 times that of the unexpanded intercalated flake. The expanded worm-shaped particles surrounded the admixed calcium metasilicate fibers and the mixture was rolled into a flexible graphite sheet 0.254 mm (0.01 inch) thick and 609.6 mm (24 inched) wide in which admixed calcium metasilicate fibers extended from a surface of the sheet into the body of the sheet which contained about 12% by weight of the calcium metasilicate fiber.

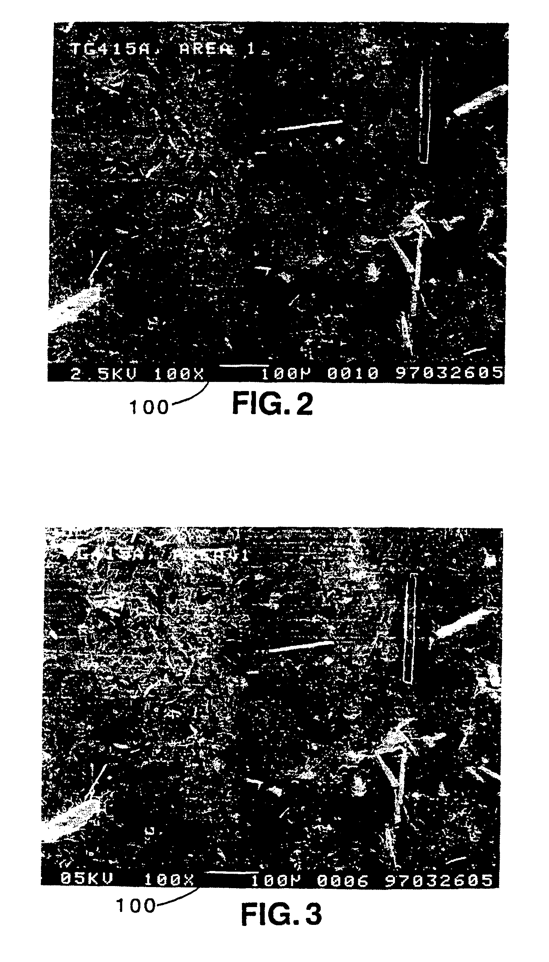

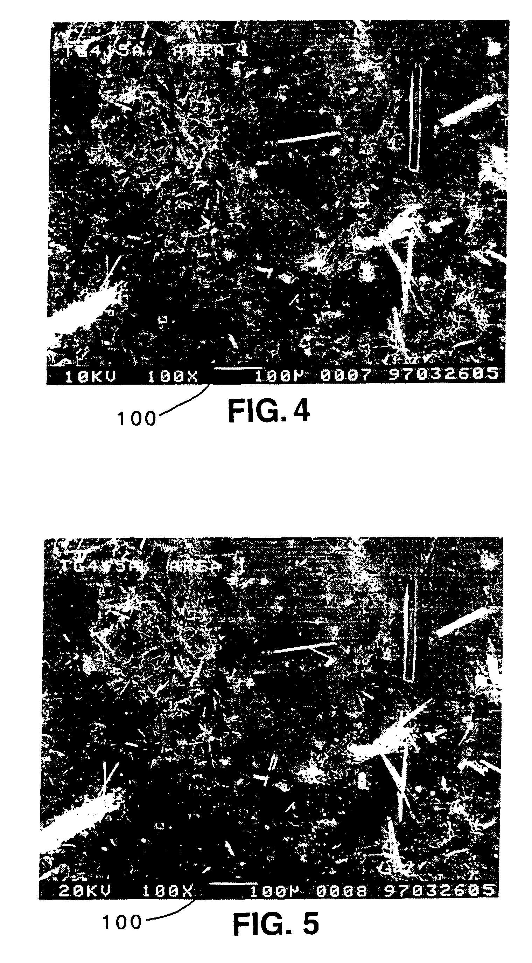

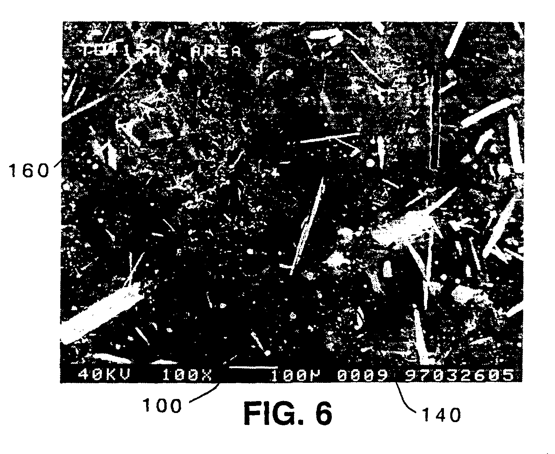

The electron microscope view of Figure 2 (100X- see 100 micron scale) shows the upper portion of a ceramic fiber 100 which penetrates a planar surface 22 of a flexible graphite sheet. Figures 3 to 6, at increasing voltages, look "deeper" into the flexible graphite sheet and show the penetration of ceramic fiber 100 into the flexible graphite sheet. Ceramic fibers embedded in the flexible graphite sheet below surface 72 are shown at 140, 160.

### EXAMPLE II

A sample of the sheet of Example I, 203.2 mm (8 inches) wide was immersed in and pulled through a solution of resin 10% phenolic resin with acetone diluent at a rate of 3.048 m (10 feet) per minute. After immersion and drying, the sample showed an increase in weight of 18.7%.

The sample was further treated by heating to 235°C to stabilize the resin and the sheet was calendered between pressure rolls to a density of 1.5 gms/cc. The calendered sheet was soaked in oil and water and was unaffected. A control sheet without any added ceramic fiber or resin additives exposed to the same test conditions increased about 35% in weight and 8% in thickness.

Sample sheets with 5%, 15% and 25% by weight of calcium metasilicate fibers as additive were pulled through resin at a rate of 10 feet per minute and were saturated with resin at about 17-19% by weight of resin. A control sample without any added ceramic fiber retained only 5% by weight of resin at the same pull rate of 3.048 m (10 feet) per minute.

## Claims

1. A flexible graphite sheet having opposite planar outer surfaces, said flexible graphite sheet having embedded therein a dispersion of a plurality of needle-shaped ceramic fiber particles which are non-reactive with flexible graphite and stable at temperatures up to 1371.1°C (2500°F) in an amount of 1.5 to 30% by weight, said needle-shaped ceramic fiber particles extending into said graphite sheet from at least one of said planar outer surfaces to increase the permeability of the graphite sheet to a liquid resin solution.

2. A flexible graphite sheet as claimed in claim I, wherein the sheet is a roll-pressed sheet having a thickness of from 0.1 to 3.5 mm.

3. A flexible graphite sheet as claimed in claim 1, wherein the needle shaped ceramic fibers are selected from macerated quartz glass fibers, carbon fibers, graphite fibers, zirconia fibers, boron nitride fibers, silicon carbide fibers, magnesia fibers, calcium metasilicate fibers, calcium aluminium silicate fibers and aluminium oxide fibers.

4. A flexible graphite sheet as claimed in claim 1, wherein the needle shaped ceramic fiber particles are calcium metasilicate particles.

5. A flexible graphite sheet as claimed in claim 1, wherein said needle shaped ceramic fiber particles have a length of from 0.15 to 1.5 millimetres.

6. A flexible graphite sheet as claimed in claim I, wherein a plurality of annular channels surround respective needle shaped ceramic fiber particles extending from at least one of said planar outer surfaces of the graphite sheet.

7. A method for making a flexible graphite sheet having opposite planar outer surfaces which is permeable to liquid resin solution, which comprises:
(i) treating natural graphite flake with an intercalating solution to obtain heat expandable, intercalated graphite flake particles;
(ii) mixing from 1.5 to 30 % by weight of needle-shaped ceramic fiber particles with said intercalated graphite flake particles to provide a blended mixture, said needle-shaped ceramic fiber particles being non-reactive with flexible graphite and stable at temperatures up to 1371.1 °C (2500°F);
(iii) passing said blended mixture of intercalated natural graphite flake particles and needle-shaped ceramic fiber particles through a flame to cause rapid exfoliation of said intercalated natural graphite particles and provide a mixture of said needle-shaped ceramic fiber particles with exfoliated graphite particles; and
(iv) passing said mixture of needle-shaped particles and exfoliated graphite particles between pressure rolls to form a compressed sheet of flexible graphite having embedded therein a dispersion of a plurality of needle-shaped particles which extend from at least one of said planar outer surfaces into the sheet.

8. A method as claimed in claim 7, wherein (i) the sheet of step (iv) is immersed in resin which penetrates the sheet; (ii) the resin is stabilized by heating; and (iii) the resin containing sheet is calendered by passing the resin containing sheet between pressure rolls.

## Patentansprüche

1. Flexible Graphitlage mit einander gegenüberliegenden planaren Außenflächen, wobei in die flexible Graphitlage eine Dispersion aus einer Mehrzahl von nadelförmigen keramischen Faserteilchen, die mit flexiblem Graphit nicht reagieren und bei Temperaturen bis zu 1371,1 °C (2500 °F) stabil sind, in einer Menge von 1,5 bis 30 Gew.% eingebettet ist, und wobei sich die nadelförmigen keramischen Faserteilchen in die Graphitlage von mindestens einer der planaren Außenflächen aus hinein erstrecken, um die Permeabilität der Graphitlage für eine flüssige Harzlösung zu steigern.

2. Flexible Graphitlage nach Anspruch 1, wobei die Lage eine walzengepresste Lage mit einer Dicke von 0,1 bis 3,5 mm ist.

3. Flexible Graphitlage nach Anspruch 1, wobei die nadelförmigen keramischen Faserteilchen ausgewählt sind aus mazerierten Quarzglasfasern, Kohlefasern, Graphitfasern, Zirkonoxidfasern, Bornitridfasern, Siliziumkarbidfasern, Magnesiumoxidfasern, Kalziummetasilikatfasern, Kalziumaluminiumsilikatfasern und Aluminiumoxidfasern,

4. Flexible Graphitlage nach Anspruch 1, wobei die nadelförmigen keramischen Faserteilchen Kalziummetasilikatteilchen sind.

5. Flexible Graphitlage nach Anspruch 1, wobei die nadelförmigen keramischen Faserteilchen eine Länge von 0,15 bis 1,5 mm haben.

6. Flexible Graphitlage nach Anspruch 1, wobei eine Mehrzahl von ringförmigen Kanälen betreffende nadelförmige keramische Faserteilchen umgeben, die sich von mindestens einer der planaren Außenflächen der Graphitlage aus erstrecken.

7. Verfahren zum Herstellen einer flexiblen Graphitlage mit einander gegenüberliegenden planaren Außenflächen, die für eine flüssige Harzlösung permeabel ist, wobei:
(i) natürliche Graphitflocken mit einer interkalierenden Lösung behandelt werden, um wärmeexpandierbare, interkalierte Graphitflockenteilchen zu erhalten;
(ii) 1,5 bis 30 Gew.% aus nadelförmigen keramischen Faserteilchen mit den interkalierten Graphitflockenteilchen vermischt werden, um ein durchmischtes Gemisch bereitzustellen, wobei die nadelförmigen keramischen Faserteilchen mit flexiblem Graphit nicht reagieren und bei Temperaturen bis zu 1371,1 °C (2500 °F) stabil sind;
(iii) das Gemisch aus interkalierten natürlichen Graphitflockenteilchen und nadelförmigen keramischen Faserteilchen durch eine Flamme hindurch geleitet wird, um ein rasches Aufblähen der interkalierten natürlichen Graphitteilchen zu bewirken und ein Gemisch aus den nadelförmigen keramischen Faserteilchen mit expandierten Graphitteilchen bereitzustellen; und
(iv) das Gemisch aus nadelförmigen Teilchen und expandierten Graphitteilchen zwischen Druckwalzen hindurchgeleitet wird, um eine komprimierte Lage aus flexiblem Graphit auszubilden, in die eine Dispersion aus einer Mehrzahl von nadelförmigen Teilchen eingebettet ist, die sich von mindestens einer der planaren Außenflächen aus in die Lage hinein erstrecken.

8. Verfahren nach Anspruch 7, bei dem (i) die Lage des Schritts (iv) in Harz eingetaucht wird, das in die Lage eindringt; (ii) das Harz durch Erwärmen stabilisiert wird; und (iii) die harzhaltige Lage kalandriert wird, indem die harzhaltige Lage zwischen Druckwalzen hindurch geleitet wird.

## Revendications

1. Feuille de graphite flexible ayant des surfaces extérieures planes opposées, ladite feuille de graphite flexible comprenant à l'état inclus une dispersion d'une pluralité de particules consistant en fibres céramiques en forme d'aiguilles qui sont non réactives avec le graphite flexible et stables à des températures allant jusqu'à 1371,1°C (2500°F) en une quantité de 1,5 à 30 % en poids, lesdites particules consistant en fibres céramiques en forme d'aiguilles s'étendant dans ladite feuille de graphite à partir d'au moins une desdites surfaces extérieures planes pour accroître la perméabilité de la feuille de graphite à une solution de résine liquide.

2. Feuille de graphite flexible suivant la revendication 1, qui est une feuille pressée par laminage ayant une épaisseur de 0,1 à 3,5 mm.

3. Feuille de graphite flexible suivant la revendication 1, dans laquelle les fibres céramiques en forme d'aiguilles sont choisies entre des fibres de verre au quartz macérées, des fibres de carbone, des fibres de graphite, des fibres de zircone, des fibres de nitrure de bore, des fibres de carbure de silicium, des fibres de magnésie, des fibres de métasilicate de calcium, des fibres de silicate de calcium et d'aluminium et des fibres d'oxyde d'aluminium.

4. Feuille de graphite flexible suivant la revendication 1, dans laquelle les particules consistant en fibres céramiques en forme d'aiguilles sont des particules de métasilicate de calcium.

5. Feuille de graphite flexible suivant la revendication 1, dans laquelle les particules consistant en fibres céramiques en forme d'aiguilles ont une longueur de 0,15 à 1,5 millimètre.

6. Feuille de graphite flexible suivant la revendication 1, dans laquelle une pluralité de canaux annulaires entoure, respectivement, les particules consistant en fibres céramiques en forme d'aiguilles s'étendant à partir d'au moins une desdites surfaces extérieures planes de la feuille de graphite.

7. Procédé pour la préparation d'une feuille de graphite flexible ayant des surfaces extérieures planes opposées qui est perméable à une solution de résine liquide, qui comprend les étapes consistant :
(i) à traiter des paillettes de graphite naturelles avec une solution d'intercalation pour obtenir des particules consistant en paillettes de graphite intercalées aptes à la dilatation thermique ;
(ii) à mélanger une quantité de 1,5 à 30 % en poids de particules consistant en fibres céramiques en forme d'aiguilles auxdites particules consistant en paillettes de graphite intercalées pour obtenir un mélange formulé, lesdites particules consistant en fibres céramiques en forme d'aiguilles étant non réactives avec le graphite flexible et stables à des températures allant jusqu'à 1371,1°C (2500°F) ;
(iii) à faire passer ledit mélange formulé de particules consistant en paillettes de graphite naturelles intercalées et de particules consistant en fibres céramiques en forme d'aiguilles à travers une flamme pour provoquer une exfoliation rapide desdites particules de graphite naturelles intercalées et former un mélange desdites particules consistant en fibres céramiques en forme d'aiguilles avec les particules de graphite exfoliées ; et
(iv) à faire passer ledit mélange de particules en forme d'aiguilles et de particules de graphite exfoliées entre des rouleaux presseurs pour former une feuille comprimée de graphite flexible comprenant à l'état inclus une dispersion d'une pluralité de particules en forme d'aiguilles qui s'étendent à partir d'au moins une desdites surfaces extérieures planes dans la feuille.

8. Procédé suivant la revendication 7, dans lequel (i) la feuille de l'étape (iv) est immergée dans une résine qui pénètre dans la feuille ; (ii) la résine est stabilisée par chauffage ; et (iii) la feuille contenant la résine est calandrée par passage de la feuille contenant la résine entre des rouleaux presseurs.
